# EUROPEAN PATENT APPLICATION

(11) **EP 1 684 471 A1**
(43) Date of publication of application: **26.07.2006**
(21) Application number: 05001134.5
(22) Date of filing: 20.01.2005
(51) Int. Cl.: H04L 12/56

(54) **Method, mobile host and router providing packet switched connection during handover**

(71) Applicant: MATSUSHITA ELECTRIC INDUSTRIAL CO., LTD., Kadoma-shi, Osaka 571-8501 (JP)
(72) Inventor: Velev, Genadi, 64295 Darmstadt (DE); Bachmann, Jens, 61440 Oberursel (DE)
(74) Representative: Grünecker, Kinkeldey, Stockmair & Schwanhäusser Anwaltssozietät

(57) **Abstract**

The proposed method comprises receiving, by a mobile host, information about an identity of an egress node of at least part of a network using a first protocol for establishing a data tunnel between an access router and an egress node; sending a message comprising information about said identity of said egress node and an identity of said mobile host from said mobile host to said access router, using a second protocol for communicating control messages, associated with addressing of data packets. The method further comprises the step of establishing a data tunnel from the access router to the egress node, wherein the data tunnel carries data packets destined for the mobile host.

## Description

### BACKGROUND OF THE INVENTION

### 1. Field of the Invention

The present invention generally relates to mobile networks.
In particular, this invention is related to mobile networks with a wireless access network based on Multi-Protocol Label Switching (MPLS).

### 2. Description of the Related Art

This invention considers a scenario of a mobile network, in which Multi-Protocol Label Switching (MPLS) and Label Switched Paths (LSP) are deployed as a transport technology between an IP gateway (GW) and edge equipment (e.g. Radio Access Controller, RAC or Base Station, BS). To assure that the QoS requirements are met, the LSP is set up deploying Traffic Engineering (TE) options of MPLS signalling. The data packets destined to a roaming end-receiver (Mobile Host, MH) are tunnelled over such an LSP, which is also referred as LSP tunnel. The LSP tunnel can be both point-to-point (P2P) or point-to-multipoint (P2MP).

As a consequence of the MH movement, the egress LSP tunnel point (egress Label Switched Router, egress LSR) changes. The focus of this invention is on assuring the continuity of the MPLS-based connection while the traffic over an existing LSP tunnel to an old egress LSR is re-directed to a new LSP tunnel to a new egress LSR.

Mobility management solutions for data communication in cellular networks, for example 2G (GSM) and 3G (UMTS), are technology specific and/or circuit-switched. For future forth generation (4G) mobile networks, mobility solutions are needed which are based on packet-switched transport technologies. The IETF has standardized mobility management for IP-based packet-switched networks known as Mobile IP (MIP). In this standard, the IP routing uses the packet's IP address as information about the destination point, i.e. the IP address determines unambiguously the geographical point of attachment. MIP extends the classical IP routing with the mobile host's possibility to be associated with two IP addresses: a static "home" address and a dynamic "care-of-address" (CoA), which reflects the MH's current point of attachment. An overview about the functionality of MIP can be found in C. Perkins et. al., "IP Mobility Support for IPv4", RFC 3344, August 2002, pp. 3-17.

Further herein below, a scenario is assumed where, in contrary to the MIP scenario, the mobile host keeps the same IP address when it moves within one MPLS-based Radio Access Network (RAN). With other words, the mobility of the MH can be categorized as a micro-mobility. The IP packets are tunnelled over the MPLS-based RAN employing traffic engineered (TE) MPLS LSP, which assures together with fast transport also QoS and TE. A method will be described for supporting an alternative approach for mobility within an MPLS domain.

### SYSTEM MODEL

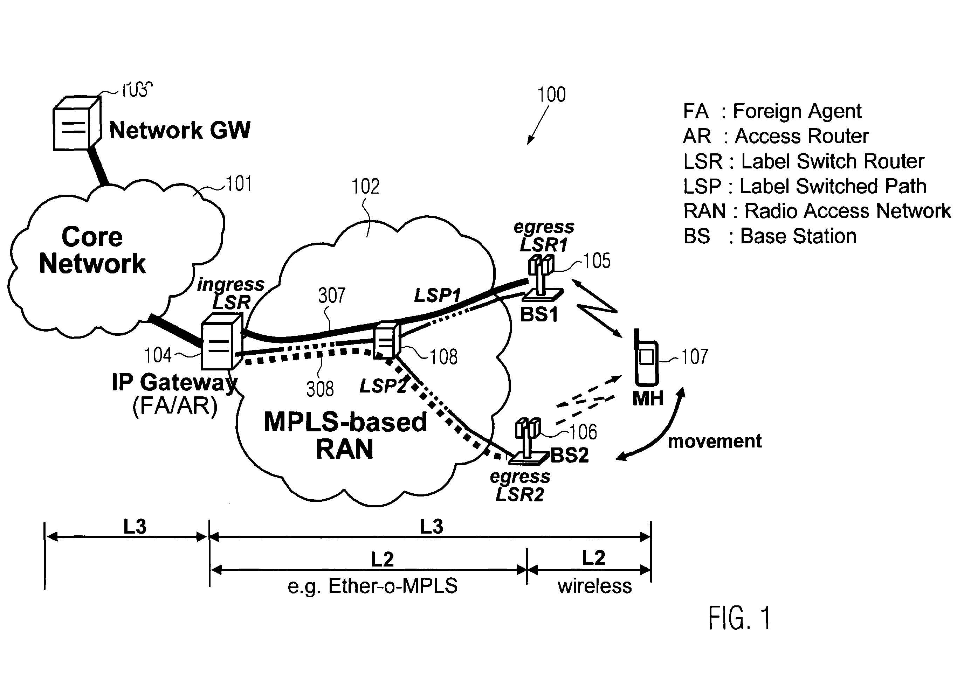

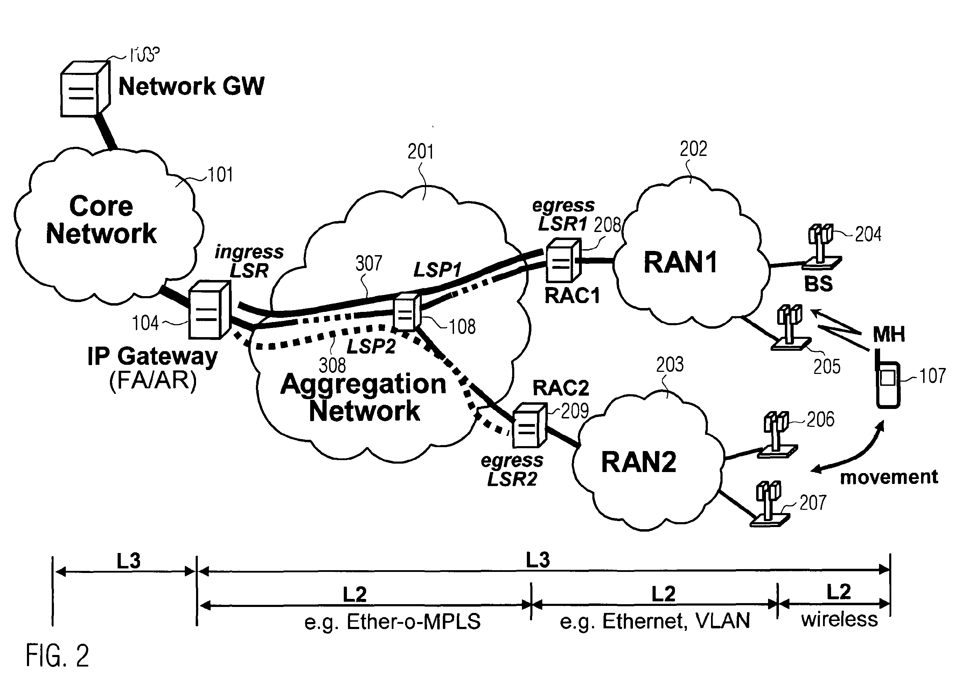

This invention is based on network architectures considered in future mobile networks. The network is divided into two parts ― one including the part between network gateway and IP gateway (Core network) and second including the part between IP gateway and MH (Radio Access Network, RAN). According to the scenario considered herein, the MH does not change its IP address while moving within one RAN. This means that the IP gateway is located on the edge of the RAN facing the Core network. Figure 1 depicts one possible system model, in which the method proposed in this invention can be applied. The data transport over the RAN is based on TE MPLS (in this case one can say that the transport is performed on layer 2,5 or L2,5), while the transport over the Core network is carried over the IP layer (layer 3, L3) packet-switched network due to scalability reasons. In Figure 1 the names of the entities depicted in normal letters show the functional categorization, as for instance IP gateway, BS, Network gateway etc. The names written in italics show the corresponding names in MPLS terminology, e.g. ingress/egress LSR. A second possible system model is depicted in Figure 2 where TE MPLS is applied over an aggregation network connecting the IP gateway and the small L2 RANs.

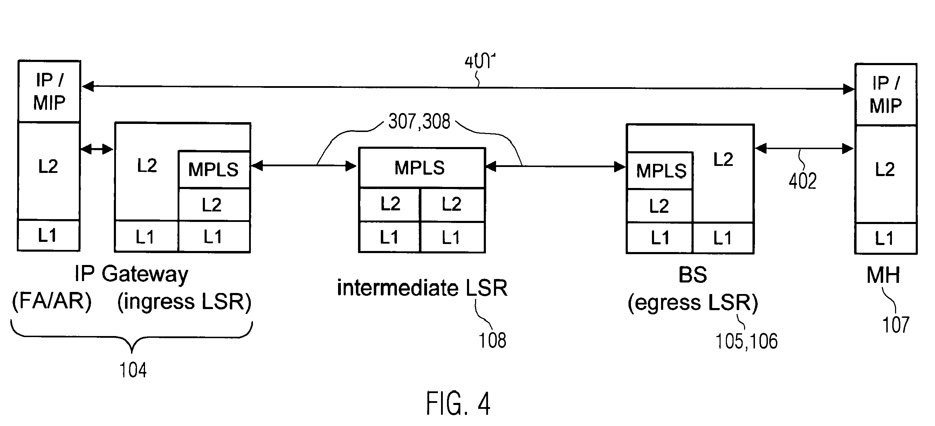

The IP gateway (IP GW) 104, as shown in Figure 1 and Figure 2, is an entity implementing the functions of (i) Foreign Agent (FA) or Access Router (AR) in the IP layer and (ii) ingress LSR in the MPLS transport layer. Both terms FA and AR are used to show that both Internet Protocol versions, IPv4 and IPv6, are supported in this invention. Normally, FA is an element of mobile IPv4 protocol, whereas AR is rather used in connection with mobile IPv6 protocol. A detailed description of the FA functionality can be found in sections 1.5 and 3.7 in RFC 3344. It is not necessary that the egress LSR and FA/AR are physically located in the same entity, it is rather important that egress LSR and FA/AR communicate via common L2 technology as shown in Figure 4. According to this latter figure, the FA/AR provides L3 services to the MH 107, as the L3 (IP) packets between FA/AR and MH 107 are carried over 2 distinct L2 technologies. Further herein below "IP GW" will be used as a generic term including the functions of egress LSR and FA/AR. This invention focuses on the part of the network, where LSP tunnels carry data associated with a MH 107 between IP GW 104 and egress LSR 105, 106, 208, 209.

According to the scenario assumed in Fig. 1, the ingress LSR is in the GW 104 and the egress LSR is in the BS 105, 106. The packets entering the mobile network and destined to a particular MH are encapsulated at the ingress LSR (i.e. addition of MPLS label), transported over a pre-set up LSP tunnel, de-capsulated at the egress LSR and transported on L2 over the wireless channel to the MH. With respect to the assumption in Figure 1, the BS is an entity implementing in the data plane (i) L2 protocol(s) used over the MPLS-based RAN, (ii) L2 protocol(s) over the wireless channel and (iii) edge/egress LSR functionality. In the control plane, the BS implements (i) MPLS control protocol(s), i.e. RSVP-TE, and (ii) some additional IP-based signalling protocols for e.g. exchanging Authorization, Authentication and Accounting (AAA) with central entities in the Core network.

Figure 1 presents one possible network architecture, however, the current invention is also applicable to other scenarios where the LSP tunnel is formed over the whole or a portion of the wired part of the mobile network as described for instance in Figure 2.

The term MH used in this document is a common representative for a mobile computing device as notebook, audio(-visual) communication device like 3G-user equipment (UE) or even a personal area network (PAN), which is formed by several personal devices. The MH is connected via wireless link with a BS, which terminates the wireless communication and assures wire line packet-switched oriented connection with further entities in the mobile network. Further, the MH communicates on L3 (network layer, or IP layer) with the IP gateway, and thus, the MH implements IP control protocols such as Internet Control Message Protocol (ICMP).

### MPLS and Mobility in MPLS

This section describes the MPLS technology and the possibilities to apply it as tunnelling protocol in mobile networks.

The MPLS concept employs two distinct functional planes: control plane and forwarding plane. In the control plane, standard routing protocols are used (e.g. "Open Shortest Path First", OSPF, and "Border Gateway Protocol", BGP) to exchange information with other routers to build and maintain a forwarding table. In the forwarding plane the forwarding component searches, when data packets arrive, in the forwarding table to make a routing decision for each packet. To each packet a short label with fixed length is attached identifying the Forwarding Equivalent Class (FEC). The forwarding plane in MPLS is based on a so-called label swapping algorithm. The label switch (known as Label Switch Router, LSR) performs a routing table lookup, maps the packet to a FEC and then assigns a label to the packet before forwarding it to the next LSR in the Label Switched Path (LSP). A detailed specification of the MPLS concept can be found in sections 2 and 3 of E. Rosen, Floyd, A. Viswanathan, and R. Callon, "Multiprotocol Label Switching Architecture", RFC 3031, January 2001, pp. 3-37.

The MPLS described above still has the hop-by-hop forwarding paradigm inherited from standard IP routing. To increase the efficiency and the reliable network operations in the MPLS domain, as well as to meet QoS requirements, Traffic Engineering (TE) capabilities for MPLS are specified mainly in sections 2, 3 and 4 of D. Awduche, J. Malcolm, J. Agogbua, M. O'Dell, J. McManus, "Requirements for Traffic Engineering Over MPLS", RFC 2702, September 1999, pp. 4-10. These capabilities can be used to optimize the utilization of network resources and to enhance traffic oriented performance characteristics. An LSP set up by TE constraints is called LSP tunnel, since the flow along an LSP is completely identified by the label applied at the ingress node of the path. If sets of LSP tunnels are associated together, e.g. for the purpose of performing re-route operations to the whole set of LSP tunnels, such sets are called traffic engineered tunnels (TE tunnels). The definition of the terms 'LSP tunnel' and 'TE tunnel' as well as their difference are specified in sections 2 and 4 of D. Awduche, L. Berger, D. Gan, T. Li, V. Srinivasan, G. Swallow, "RSVP-TE: Extensions to RSVP for LSP Tunnels", RFC 3209, December 2001, pp. 7-15 and 17-49.

Currently MPLS is widely deployed generic transport technology, however, in the specifications no mechanisms are available to provide seamless change of the egress LSR of a LSP. Several recent publications have considered the deployment of MPLS in mobile networks. In K. Xie, V. C. M. Leung, "A MPLS Framework for Macro- and Micro-Mobility Management", Wireless and Optical Communications Conference, July 2002, two mechanisms for applying MPLS in an integrated macro- and micro-mobility management environment are proposed. The first mechanism proposes segmented LSP to support Differentiated Services (DiffServ). The second one proposes ERO swapping in the LSP setup phase to support Integrated Services (IntServ). The mechanism for supporting IntServ is closer to the present invention, as the MH informs the gateway (GW) about the new BS after the handover to the new BS occurred. Then the GW starts the setup of new LSP to the new BS. In prior art according to Xie and Leung the MH is the egress LSR, whereas further herein below the BS is the egress LSR. Further, it is not specified in prior art how the MH informs the GW about the new BS. In the method according to the present invention it is exactly specified how the MH informs the ingress LSR about the BS serving as egress LSR.

T. Yang, Y. Dong, Y. Zhang, D. Makrakis, "Practical Approaches for Supporting Micro Mobility with MPLS", International Conference on Telecommunications, June 2002, propose a Micro Cell Mobile MPLS (MM-MPLS) scheme, which is an incorporation of MPLS forwarding, localized signalling and soft-state location management. In this scheme, two levels of foreign agents are suggested - Foreign Domain Agent (FDA) and Foreign Agent (FA). When the MH hands off to a new FA, it sends a Registration Request (RR) message to the new FA. The new FA will relay the RR message to the FDA. On the way to the FDA, the RR will pass several intermediate LSRs and possibly there are LSRs with an entry of the MH's home address as FEC. A crossover LSR is defined in this paper, which will set up a new LSP to the new FA using the MH's home address as FEC. The mechanism proposed in Yang, Dong, Zhang and Makrakis, cited above, defines changes in the intermediate LSRs and FECs, which are identified by the MH's home address. In contrary to this mechanism, the method according to the present invention does not require changes in the intermediate nodes and in the MPLS plane at all, except for the inter-layer communication in the ingress LSR.

In contrary to the mechanisms described in Xie and Leung, cited above, and in Yang, Dong, Zhang and Makrakis, cited above, further herein below a scenario will be regarded where the MH retains the same IP address when roaming between distinct egress LSRs. The MH retains its IP address while changing the egress LSR, as long as the IP GW remains the same. A description of the assumed system architecture is given above in connection with figures 1 and 2. Having this scenario in mind, it is necessary to provide mobility mechanisms for smooth, fast and error-free re-direction of the user's data flow from the old to the new egress LSRs (i.e. new BS).

In a MPLS network, the control-specific information is conveyed using MPLS signalling protocols, e.g. RSVP-TE, LDP (Label Distribution Protocol) and CR-LDP (Constraint-based Routing LDP). A problem occurs, if a non-MPLS node A, not having any MPLS-specific protocols implemented, wants to signal any information to a MPLS node for the purpose of changing the MPLS configuration. In this case the MPLS-specific signalling protocols can not be applied. In particular, the MH of the system model described above cannot make use of MPLS specific signalling protocols to transmit information related to the re-configuration of LSP tunnels carrying data for the MH, as the MH does not have MPLS capabilities implemented.

### Internet Control Message Protocol (ICMP)

ICMP is a protocol utilized in the communication between IP gateway and destination host or between a source host and destination host. ICMP carries messages used by end hosts or routers to help the correct datagram processing in the network layer. ICMP, uses the basic support of IP as if it were a higher level protocol, however, ICMP is actually an integral part of IP, and must be implemented by every IP module. The basic specification of ICMP can be found in J. Postel, "Internet Control Message Protocol", RFC 792, September 1981. A number of updates to ICMP have been published since this initial specification, which reflects the increased need of control messages for the evolving IP networks.

S. Deering, "ICMP Router Discovery Messages", RFC 1256, September 1991 specifies an extension of the ICMP to enable hosts attached to multicast or broadcast networks to discover the IP addresses of their neighbouring routers. The mechanism specified in this RFC is called "Router Discovery" and two new messages are introduced: "Router Advertisement" and "Router Solicitation". The mechanism works as follows: Each router periodically multicasts a Router Advertisement from each of its multicast interfaces, announcing the IP address(es) of that interface. Hosts discover the addresses of their neighbouring routers simply by listening for advertisements. When a host attached to a multicast link starts up, it may multicast a Router Solicitation to ask for immediate advertisements, rather than waiting for the next periodic ones to arrive.

Another extension of ICMP for IPv6 is presented in T. Narten, "Neighbor Discovery for IP Version 6 (IPv6)", RFC 2461, December 1998. This document is analogous to Deering, cited above, and specifies a protocol called "Neighbor Discovery", which solves a set of problems related to the interaction between nodes attached to the same link, among others the "Router Discovery" described in the previous paragraph. IPv6 nodes on the same link use Neighbor Discovery to discover each other's presence, to determine each other's link-layer addresses, to find routers and to maintain reachability information about the paths to active neighbours. Neighbor Discovery defines 5 different ICMP packet types:
- A pair of "Router Solicitation" and "Router Advertisement" messages,
- A pair of "Neighbor Solicitation" and "Neighbor Advertisements" messages and
- A "Redirect" message.

Further information on ICMP can be found in the corresponding references.

W00045560 is based on the assumption that the mobility service in a public mobile data access network in which the point of attachment changes is managed by the mobile IP protocol. In the assumed architecture, one or more (virtual) home agents (HAs) can be present and connected via a virtual private network (VPN) for each mobile node. Further, home and foreign agents (FAs) can be co-located. The MIP packets between HA and FA are carried over MPLS tunnels, whereas the tunnels are set up by the HA considering several tunnel attributes (e.g. bandwidth, class of service, traffic type etc.). However, the proposed method requires the mobile IP protocol. Therefore a simplified method for providing mobility is needed.

W02004057803 and W02004057789 describe a method for aggregation of IP packet flows over an access link between a wireless access router (e.g. access node or base station) and a core node. Whereas W02004057803 presents the information needed at the access node in order to classify the incoming packet flows, W02004057789 presents what kind of information shall be included in the control aggregation message. The proposed method requires access router functionality in the BS and is based on MIP protocol, as no packet classification information is included in the signalling. Therefore a simplified method for providing mobility is needed for networks in which the BSs do not support access router functionality and/or MIP.

W02003092226 describes a method of transporting data packets between ingress tunnel point (BS or RNC) and egress tunnel point (GGSN) in a 3G mobile network system. The forwarding of the packets is performed with the help of two labels attached to the data packets according to a Forwarding Equivalent Class (FEC). The ingress and egress tunnel points maintain a FEC table containing mapping information, which helps for the assignment of the second label. The FEC tables in ingress and egress tunnel points are updated using RANAP or RANSAP signalling protocols. However, no mobility aspects are considered, i.e. there are no provisions for the case that mobile users change ingress/egress tunnel points. Further, no means for support of QoS requirements are foreseen. Therefore there is a need for a method assuring a required QoS of services associated with a MH roaming within one radio access domain.

The introduction of TE MPLS in mobile networks incorporates the advantages of packet-switched network with the possibility to provide QoS (especially relevant for real-time services) and TE needed to optimize the network load. Since the deployed system model assumes the application of TE MPLS and MPLS flow (i.e. LSP tunnel) is set up per MH, it is required to dynamically change the egress LSP tunnel point (i.e. egress LSR) each time when the MH moves to a new egress LSR. Most of the currently known schemes for employing mobility in MPLS are based on Mobile IP assuming that a new CoA IP address is assigned to the MH when it changes the egress LSR. However, there is a need for a method which allows the MH to keep the same IP address when it roams between distinct egress LSRs.

### SUMMARY OF THE INVENTION

In view of the considerations given above, it is an object of the present invention to provide an improved signalling capability for the exchange of information related to multi-protocol label switching in a mobile network. It is a further object of the present invention to provide a method of informing the ingress LSR (1) about the existing tunnel(s) destined to the old egress LSR and (2) about the new egress LSR. It is a further object of the present invention to provide a method for communicating information (egress LSR ID, LSP ID etc.) needed by MPLS to perform LSP re-direction at handover between the MPLS entities. It is still another object of the present invention to provide mobility mechanisms to MPLS-based RAN, which are not based on MIP and intend to reduce the signalling overhead associated with the mobile IP protocol.

The present invention provides a method in which information related to multi-protocol label switching is transmitted using messages according to the internet control message protocol.

The present invention further describes a method for continuous connectivity between ingress LSR and MH in the case that at least a part of the connection between ingress LSR and MH is based on TE MPLS transport and the MH keeps the same IP address while roaming between distinct egress LSRs. In order to achieve the objects of the present invention, ICMP signalling is employed for the communication of MPLS-related information between the MH and ingress LSR (latter acting as AR).

Further, the present invention achieves these objects by a MH providing information exchange between L2 and ICMP implementations and by an ingress LSR providing information exchange between ICMP and MPLS implementations.

The method works as follows. When the MH moves into the area of new egress LSR (e.g. new BS), the MH receives a broadcast message from the new egress LSR, containing its L2 ID, i.e. the new egress LSR MAC address. In the MH, the L2 interface notifies the ICMP implementation about the new egress LSR ID, which is consequently inserted in the body of a message having a destination IP address of the AR (ingress LSR). When the AR receives this message, it extracts the new egress LSR ID and passes it together with MH IP address to the MPLS layer (i.e. to the ingress LSR module in the IP gateway). With this information the ingress LSR can calculate an optimal LSP route to the new BS and set up either a new P2P LSP or a new branch of the old LSP.

According to one embodiment of the present invention, a method for operating a mobile network using multi-protocol label switching as a transport technology in at least a part of the network, and using internet control message protocol for communication between nodes of said mobile network, comprises the step of transmitting information related to multi-protocol label switching using messages according to the internet control message protocol.

According to a further embodiment of the present invention, a mobile host for a mobile network comprises layer 2 execution means for controlling a data link between the mobile host and an egress node of a multi-protocol label switched network; internet control message protocol execution means for executing functions according to an internet control message protocol; and inter-protocol communication means for transferring information from said layer 2 execution means to said internet control message protocol execution means, wherein said internet control message protocol execution means is further adapted to create and transmit internet control message protocol messages containing information received from said inter-protocol communication means.

According to still another embodiment of the present invention, a router for a mobile network, configured to serve as access router for said mobile network, comprises: internet control message protocol execution means for executing functions according to an internet control message protocol; multi-protocol label switching execution means for executing functions according to a multi-protocol label switching protocol; and inter-protocol communication means for transferring information from said internet control message protocol execution means to said multi-protocol label switching execution means, wherein said internet control message protocol execution means is further adapted to receive internet control message protocol messages containing information related to multi-protocol label switching, and to pass said information to said multi-protocol label switching execution means via said inter-protocol communication means.

According to a further embodiment of the present invention, a method for re-configuring, in connection with a handover, a data path for delivery of data packets to a mobile host in a mobile network which uses a first protocol for establishing a data tunnel between an access router and an egress node of at least a part of the mobile network, and using a second protocol for communicating control messages, associated with addressing of data packets, between nodes of said mobile network, the method comprising the steps of:
receiving, by the mobile host, information about an identity of an egress node of said at least a part of the network; sending a message according to said second protocol from said mobile host to said access router, said message comprising information about said identity of said egress node and an identity of said mobile host; and establishing a data tunnel from said access router to said egress node, wherein said data tunnel carries data packets destined for said mobile host.

The method of the present invention advantageously allows exchange of information related to MPLS, used for example for re-configuration of LSP tunnels, between a non-MPLS node and a MPLS node. Since ICMP is implemented in each IP-capable node, no new protocols are required, neither in MH nor in ingress LSR; rather minor extensions in ICMP are needed to in order to allow it for carrying MPLS-related information. The method proposed in this invention advantageously shortens the time needed to set up a new LSP tunnel to the new egress LSR based on the cross-layer information exchange between L2-ICMP in the MH and between ICMP and MPLS in the AR. The method according to the present invention further advantageously reduces the signalling overhead in comparison to the mobile IP protocol, thus reducing traffic on the network and relieving the involved entities from processing workload.

### BRIEF DESCRIPTION OF THE DRAWINGS

The accompanying drawings are incorporated into and form a part of the specification for the purpose of explaining the principles of the invention. The drawings are not to be understood as limiting the invention to only the illustrated and described examples of how the invention can be made and used. Further features and advantages will become apparent from the following and more particular description of the invention, as illustrated in the accompanying drawings, wherein
Fig. 1 describes an example of system architecture applicable for the method presented in this invention;
Fig. 2 introduces another option of network architecture in which the method of the present invention can be applied;
Fig. 3 represents an overlay model for the exchange of signalling information, based on the system architecture depicted in Figure 1;
Fig. 4 shows the data plane protocol stacks in some key entities;
Fig. 5 shows the protocol stack in the communication between MH and AR;
Fig. 6 depicts the signalling procedures for setting up new P2P LSP tunnel;
Fig. 7 depicts the signalling procedures for the setup of a new branch P2MP LSP tunnel between an intermediate LSR and new egress LSR;
Fig. 8 shows an exemplary structure of a label switching router; and
Fig. 9 shows an exemplary structure of a mobile host.

### DETAILED DESCRIPTION OF THE INVENTION

The exemplary embodiments of the present invention will be described with reference to the figure drawings wherein like elements and structures are indicated by like reference numbers.

The exemplary embodiments described herein below concentrate on the example of the transport of the identifier of an egress LSR in an ICMP message, however without loss of generality other MPLS-related information can likewise be included into ICMP messages.

Referring now to Fig. 1, an example of system architecture of a mobile network 100 is described in which the method presented in this invention can be applied. The network comprises a core network 101 and at least one radio access network (RAN) 102. In the general case there will be a plurality of radio access networks 102. Each RAN is connected to the core network by an ingress label switching router (LSR) 104. A plurality of base stations (BS) 105, 106 serve as egress nodes (egress LSRs) from RAN 102 and provide wireless connection to a mobile host 107. RAN 102 may also comprise intermediate LSRs 108.

As an illustrative example, the MH 107 can be attached to an AR 104 acting as foreign agent. In this case the MH 107 retrieves a Care-of-Address (CoA) as described above. The mechanism for retrieving a CoA will not be further explained herein. Since the data transport between FA/AR 104 and MH 107 is performed on L2, the resulting L2 network might become very large and scalability problems may occur. In this case, to optimize the network manageability, as well as QoS and TE in the resulting L2 network, the data traffic can be tunnelled in LSP tunnels between AR 104 and e.g. BS 105, 106. The present invention provides additional mechanisms to improve the mobility of MH 107 in a RAN, where MPLS is used as tunnelling technology between AR 104 and BS 105, 106. The network GW 103 and the AR 104 are connected via core network 101. The network GW 103 assures the connection to the Internet or other private/public networks.

Fig. 2 introduces another option 200 of network architecture, where the method of the present invention can be applied. At least two radio access networks 202 and 203 are connected to core network 101 by an aggregation network 201. Each RAN comprises one or more base stations 204 to 207. In this architecture the egress LSRs 208, 209 are located at the interface between the aggregation network and the RANs. As it is depicted in the figure, the L2 packets from AR to a Radio Access Controller (RAC) are tunnelled over MPLS TE, and the transport between RAC and BS is based on native L2 technology.

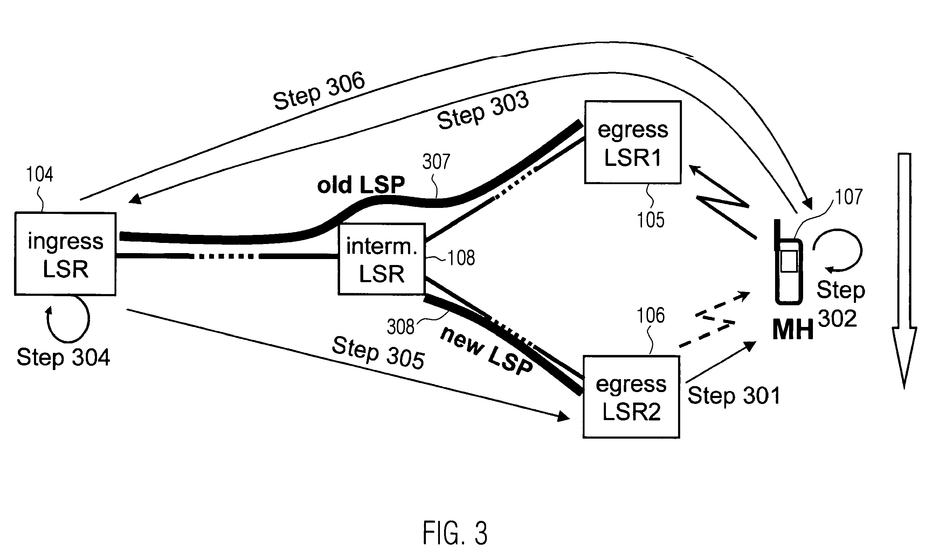

The further description of the invention below will be based on the structure shown in Fig. 1. Generally, the method described in this invention is applicable to all scenarios in which the egress point of LSP tunnel changes due to MH mobility, whereas the ingress point remains the same. Therefore, we would like to generalize the system model and to introduce an overlay model of the signalling plane as depicted in Figure 3 where the focus is on the signalling procedures between the entities rather than on their physical location.

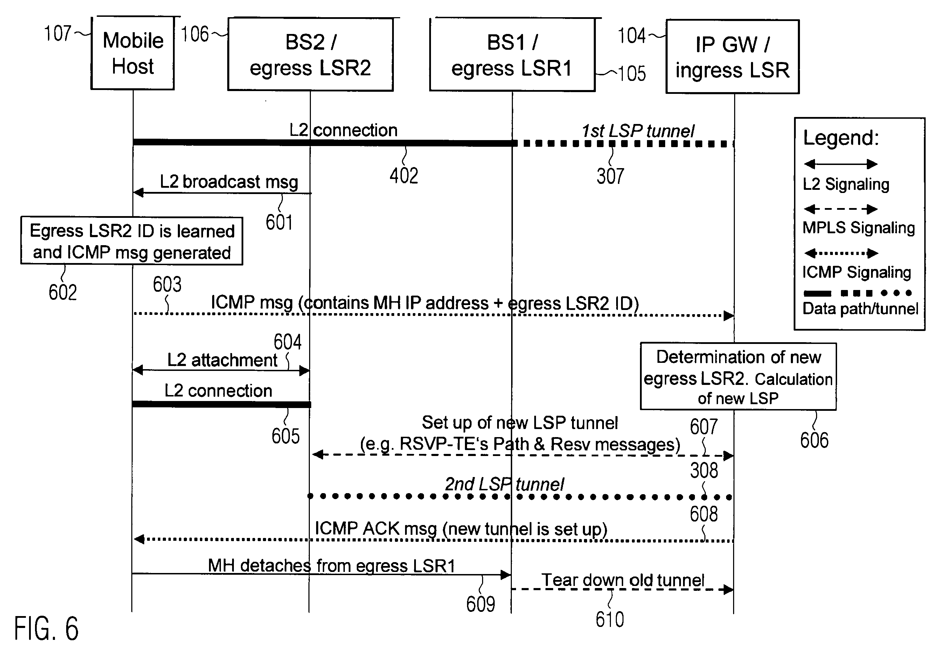

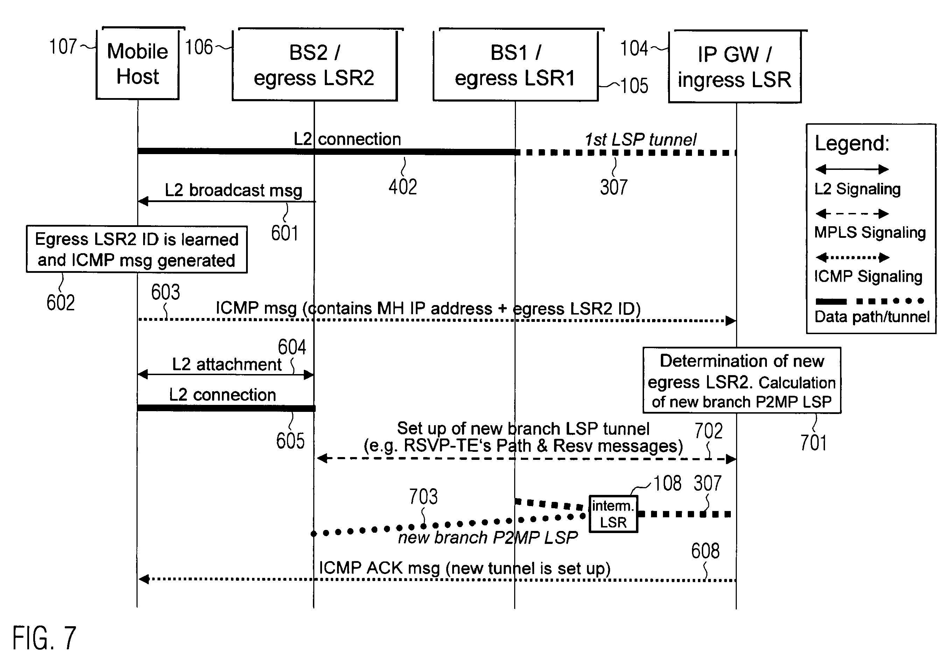

Fig. 3 represents an overlay model for the exchange of signalling information in a system architecture depicted in Fig. 1, but it can be applied to Fig. 2 as well. This overlay model represents the signalling plane including different communication layers, e.g. L2 between egress LSR and MH and L3 between ingress LSR and MH. An initial "old LSP" 307 connects the ingress LSR 104 and the old egress LSR 105 (egress LSR1). When the MH 107 moves to the area of new egress LSR 106 (egress LSR2), the MH 107 receives L2 broadcast messages depicted by step 301. The MH 107 learns the L2 address (generically called egress LSR identifier, egress LSR ID). During step 302 the egress LSR2 ID is passed from L2 to ICMP and the MH 107 generates a specific ICMP message including egress LSR2 ID. In step 303 the MH 107 sends the generated ICMP message to its AR 104 using the old LSP 307. Upon receipt of the ICMP message, the AR passes in step 304 the information about the identifier of the new egress LSR 106 (egress LSR2 ID) and the identifier of MH 107 (MH ID) to the ingress LSR 104, i.e. to the MPLS implementation. Based on the MH ID the ingress LSR 104 can find out the parameters of the existing LSP tunnel(s) 307 associated with this MH 107. Based on the egress LSR2 ID the ingress LSR knows the new egress LSR 106, to which the existing LSP(s) have to be re-directed. Step 305 shows the signalling initiated by the ingress LSR 104 to re-direct LSP tunnel(s) 307 associated with the MH 107 to the new egress LSR 106. A more detailed explanation of this signalling can be found in Figures 6 and 7.

Fig. 4 shows the data plane protocol stacks of the entities from Fig. 3, i.e. IP Gateway 104, intermediate LSR 108, BS 105, 106 and MH 107. On the left-hand side, the figure shows the protocol stacks of FA/AR and ingress LSR separately, however for the description of this invention it is assumed that FA/AR and ingress LSR are located in the same entity - in the IP Gateway 104. It is important to mention that the communication 401 between ingress LSR 104 and MH 107 takes place on a common L2 technology (e.g. Ethernet), which means that the IP Gateway 104 knows the L2 address of the MH 107. However, the L2 packets between IP Gateway 104 and BS 105, 106 are tunnelled through an LSP tunnel 307, 308. For instance, if the L2 technology were Ethernet, then the resulting protocol stack over the RAN would be Ethemet over MPLS (Ether-o-MPLS). The MH 107 is connected to the egress LSR 105, 106 via a L2 connection 402.

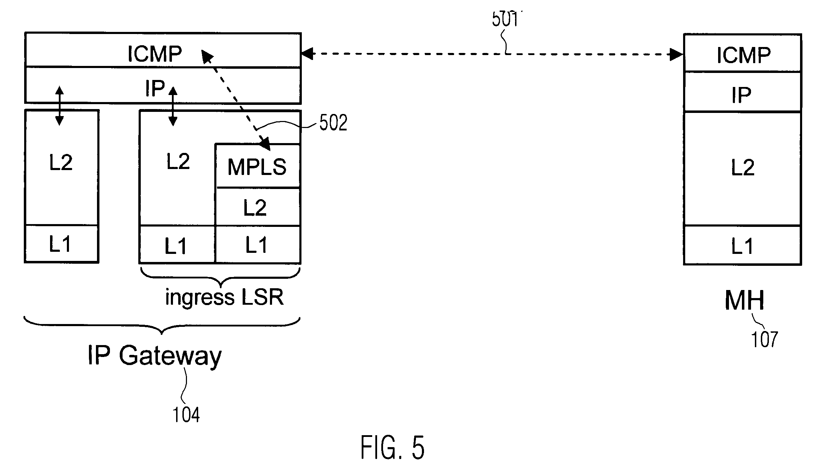

Fig. 5 shows the protocol stack in the communication between MH 107 and AR 104. The dashed arrows 501, 502 show the flow of the MPLS-related information (egress LSR2 ID and MH ID) from MH to ingress LSR. The MH 107 sends the ICMP packets directly to the IP Gateway. The ICMP packets are treated as normal IP packets and transported over the old LSP tunnel 307.

Fig. 6 depicts the signalling procedures for setting up new P2P LSP tunnel based on the method described in this invention. This figure is complementary to Fig. 3 and shows the procedures in more detail. The signalling in the different communication layers, i.e. L2, MPLS and ICMP, is depicted by using different arrow styles, so that it can easily be recognized.

It is assumed that MH 107 moves from the service area of BS1 105 to the service area of BS2 106. In step 601, MH 107 receives a layer 2 broadcast message from the new egress LSR 106 of the network. In the case of Fig. 1 it is identical with the base station. In the case of Fig. 2 it would correspond to RAC1 208 serving RAN1 202. In step 602, the entity in MH 107, which executes the MPLS protocol, learns the identifier of new egress LSR 106 and passes the information on to the entity executing the ICMP protocol. The ICMP entity creates a message containing the information about the identifier of the new egress LSR 106, received from the MPLS entity, together with information about the identity of MH 107, and sends it to IP gateway 104 (more specifically to the access router AR therein) in step 603. Several ICMP messages can be extended for this purpose. Below several examples are listed:
o If ICMPv4 is deployed, then "Router Solicitation" message, which is a part of the ICMP Router Discovery protocol can be used. One possibility is to specify a new code number meaning that the "Reserved" field is used to convey the egress LSR ID. Another alternative could be to use the ICMPv4's "Echo" message and to specify a new code number, so that the "data" field in the message can carry the egress LSR ID.
o If ICMPv6 is deployed, again the "Router Solicitation" message can be used, which is an ICMP packet and a part of the IPv6 Neighbor Discovery protocol. Please note that the "Router Solicitation" message in ICMPv4 and ICMPv6 has similar message format but different Type fields (10 for ICMPv4 and 133 for ICMPv6). Further, "Router Solicitation" in ICMPv6 has an "option" field, as new options may be defined for future applications. Currently there is only one option specified in this message - "Source link-layer address". A new option, e.g. "new egress LSR L2 address", can be specified in order to transport the egress LSR ID. A different implementation variant can allow the use of "Echo request" message, in which similar to IPv4 a new code number has to be specified.

The ICMP message carrying the egress LSR ID is transported over the existing LSP tunnel 307 to the AR.

In step 604 a L2 attachment takes place between MH 107 and new egress LSR (BS) 106, resulting in L2 connection 605. At the same time, the entity within IP gateway 104 which executes the ICMP protocol (i.e. the AR) detects that new egress LSR ID is carried in that message, determines the new egress LSR2 106 from the received message and passes this information together with information about the identity of MH 107 to the entity executing the MPLS protocol (i.e. to the ingress LSR module in the IP gateway) in step 606.

Each ingress LSR has complete information about the egress LSRs and MHs in its MPLS domain. Thus, the ingress LSR 104 can determine the IP address of the egress LSR2 106 based on the received egress LSR ID (L2 address). Further, the ingress LSR knows the MH ID and can determine which are the existing LSP tunnel(s) serving the MH 107. Having this information, the ingress LSR 104 can first determine the targeted new egress LSR2 106, second calculate an optimal new LSP 308 to it and set the proper parameter of this new LSP tunnel.

The ingress LSR initiates steps 607 to set up the LSP tunnel(s) to new egress LSR2 that are identical to the existing ones to the old egress LSR1. This action results in new LSP tunnel 308. In step 608, MH 107 informs new egress LSR2 106 about the completion of the tunnel set up with an ICMP ACK message. This is accomplished by passing information about the completion of the tunnel set up from the MPLS entity in ingress LSR 104 to its ICMP entity, which generates an ICMP message containing this information and sends it to the ICMP entity of MH 107. The format of the ACK message will not be specified here in further detail, however, extensions similar to these of the "Echo" message mentioned above can be done, whereas a new code number can be specified for the "data" field so that the Echo message can be interpreted as ACK. The information in the "ACK" message allows MH 107 to detach from old egress LSR1 105 in step 609 which in turn can tear down old LSP tunnel 307 in step 610.

Fig. 7 depicts the signalling procedures and the setup of a new branch P2MP LSP tunnel between an intermediate LSR and new egress LSR2. The difference between Fig. 6 and Fig. 7 is in the type of the LSP tunnel deployed in the existing LSP(s). If P2MP LSP tunnel is used, soft-handover can be achieved, meaning that the MH 107 is able to receive data from both new and old BSs during the handover period. The steps of the procedure are identical up to step 605. Instead of calculating a new LSP tunnel (step 606), the MPLS entity of ingress LSR 104 determines an intermediate LSR 108 as a branch LSR where the traffic is duplicated over the old and new branches in step 701 and initiates the setup of a new P2MP branch LSP between this intermediate LSR 108 and new egress LSR 106 in step 702. This assures smooth and loss-free handover, since the data traffic reaches the MH via the old and new egress LSRs. This case is preferable for the implementation of the present invention. Again the completion of this action is informed with an ACK message sent to MH 107 using ICMP.

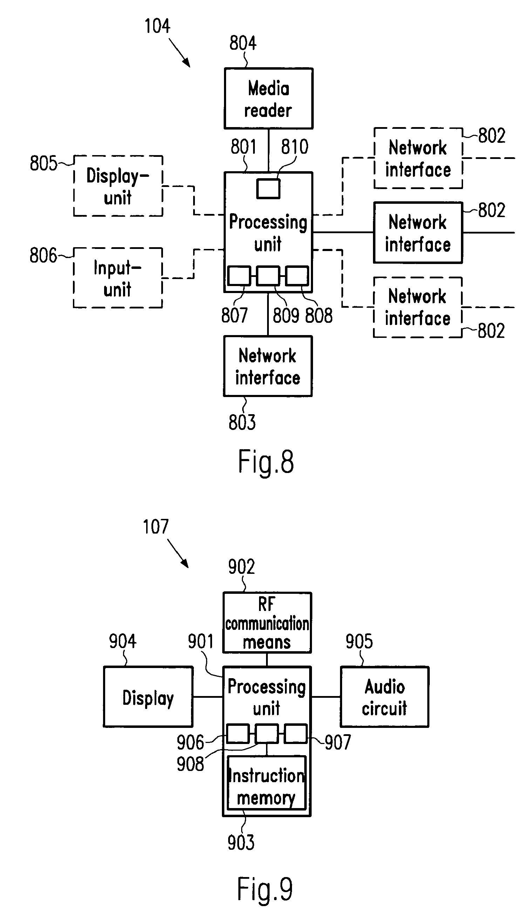

A structure of a label switching router (LSR), serving as ingress node 104 (IP gateway, FA/AR) to an MPLS-based RAN or aggregation network, is depicted in Fig. 8. The router comprises a processing unit 801, usually having one or more processors, working memory (RAM), and non-volatile storage means like flash memory or hard disk. It further comprises network interface 803 for connecting it to the core network of the mobile network and at least one network interface 802 for connecting it to other LSRs of the MPLS based aggregation network or radio access network. These LSRs might be egress LSRs or intermediate LSRs on a path to one or more egress LSRs. The router may further comprise a display unit 805 and an input unit 806 for maintenance purpose and some media reader 804 like a CD or DVD drive for loading software into the non-volatile memory of the processing unit, e.g. in the case of a software update.

Processing unit 801 further comprises an MPLS executing entity 807 and an ICMP executing entity 808. Inter-protocol communication means 809 provides an information exchange between MPLS executing entity 807 and ICMP executing entity 808. These entities might be implemented in hardware logic, but will usually be implemented in executable code, stored in the non-volatile storage of processing unit 801 and executed on a processor within processing unit 801.

ICMP executing entity 808 (in L3) in the AR 104 is configured to identify the information about new egress LSR ID carried in the message body of an ICMP message received from the MH 107. It is further configured to pass the information about the new egress LSR ID and the MH ID, contained in the previously received ICMP message header, to the MPLS executing entity 807 through inter-protocol communication means 809.

MPLS executing entity 807 is configured to initiate the following steps to set up a new LSP tunnel to new egress LSR, using the information received from ICMP executing entity 808 via inter-protocol communication means 809:
o If standard conformant RSVP-TE signalling is deployed to set up the existing LSP tunnels, ingress LSR starts to set up a new LSP tunnel to the new egress LSR;
o If P2MP signalling is deployed for the existing LSP tunnels, ingress LSR initiates the setup of a new branch LSP to the new egress LSR.

ICMP executing entity 808 is further configured to send an acknowledgement (ACK) message to the MH notifying it that the LSP tunnel to the new egress LSR is set up. To this end it generates an ICMP message containing information, received from MPLS executing entity 807 via inter-protocol communication means 809, about the completion of the tunnel setup.

Processing unit 801 further may comprise storage means 810 configured to store a database in which tunnel parameters are stored associated with identifiers of mobile hosts. The ingress LSR is adapted to resolve the MH ID, so that the existing LSP tunnel(s) serving the MH can be unambiguously identified and the parameters of this (these) tunnel(s) can be re-used for the connections to the new egress LSR. Further, the database allows to resolve the IP address of the new egress LSR based on the received egress LSR MAC address (or egress LSR ID).

A structure of a mobile host (MH) 107 is depicted in Fig. 9. It comprises a processing unit 901 with one or more processors like controller or digital signal processor which execute protocol functions, control of other units and signal processing. Processing unit 901 further comprises a layer 2 executing entity 906, an ICMP executing entity 907 and inter-protocol communication means 908 which may be implemented in hardware logic or in computer-executable code, stored in instruction memory 903.

Instruction memory 903 is usually non-volatile semiconductor memory like read-only memory or flash memory. In the case of programmable read-only memory like for example flash memory, instructions which cause the processor of processing unit 901 to perform the steps of the method according to one of the embodiments of the present invention, may be downloaded to the mobile host and stored in instruction memory 903 from other computer-readable storage media like non-volatile semiconductor memory, magnetic disc, magnetic tape or optical disc, e.g. compact disk (CD) or digital versatile disk (DVD).

Inter-protocol communication means 908 provides an information exchange between layer 2 executing entity 906 and ICMP executing entity 907. In particular, according to the present invention, mobile host (MH) 107 is capable of handing over information about the egress LSR ID received in L2 to the ICMP entity 907 through inter-protocol communication means 908. ICMP executing entity 907 is configured to generate ICMP messages (possibilities are listed above in connection with Fig. 6) containing the egress LSR ID information contained in the message body and to send this message directly to the AR 105 to which the MH 107 is attached.

The hardware necessary to provide wireless connection to a base station is summarized in RF communication means 902. MH 107 may optionally comprise further units like display 904, audio circuit 905 or other peripheral circuitry.

It is obvious to a skilled person that the described inventive method can not only be applied to mobile networks using MPLS and ICMP, but also to networks using other protocols which carry out the functionality of MPLS and ICMP described above, even if these protocols carry different names and differ in other functional details which are not of relevance for the described method.

## Claims

1. A method for operating a mobile network (100) using multi-protocol label switching as a transport technology in at least a part of the network, and using internet control message protocol for communication between nodes of said mobile network, comprising the step of:
transmitting information related to multi-protocol label switching using messages (603, 608) according to the internet control message protocol.

2. The method according to claim 1, wherein said information related to multi-protocol label switching serves for providing uninterrupted internet protocol services to a mobile host (107) while changing its location in the network (100), the method comprising the steps of:
a) obtaining (602), in said mobile host (107), information about an identifier of an egress node (106, 209) within said mobile network,
b) passing (602) the information obtained in step a) to a protocol layer executing said internet control message protocol;
c) generating (602) an internet control message protocol message containing said information obtained in step a); and
d) sending said internet control message protocol message (603) to an access router (104) of said network.

3. The method according to claim 2, further comprising, after step d), the steps of
e) receiving said internet control message protocol message (603) at said access router; and
f) passing (606) said information about an identifier of an egress node and information about an identifier of said mobile host to a protocol layer executing the multi-protocol label switching protocol.

4. The method according to claim 3, further comprising, after step f), a step g) of initiating (607) a setup of a new multi-protocol label switching tunnel (308) to the egress node (106, 209) identified by said identifier.

5. The method according to claim 3, further comprising, after step f), the steps of
h) determining (701) an intermediate node (108) within an existing multi-protocol label switching tunnel (307) as a branch node; and
i) initiating (702) a setup of a new branch multi-protocol label switching tunnel to the egress node identified by said identifier.

6. The method according to claim 4 or 5 further comprising a step k) of sending, after completion of the setup of said new multi-protocol label switching tunnel or said new branch multi-protocol label switching tunnel, an internet control message protocol message (608), informing about said completion, from said access router (104) to said mobile host (107).

7. A computer-readable storage medium having stored thereon instructions that, when executed on a processor of a mobile host (107), cause the mobile host to perform the steps of the method according to claim 1 or 2.

8. A mobile host (107) for a mobile network (101), comprising
layer 2 execution means (906) for controlling a data link between the mobile host and an egress node of a multi-protocol label switched network;
internet control message protocol execution means (907) for executing functions according to an internet control message protocol; and
inter-protocol communication means (908) for transferring information from said layer 2 execution means to said internet control message protocol execution means;
wherein said internet control message protocol execution means (907) is further adapted to create and transmit internet control message protocol messages containing information received from said inter-protocol communication means (908).

9. The mobile host (107) according to claim 8, wherein said layer 2 execution means (906) is further configured to obtain information about an identifier of an egress node (106, 209) within said mobile network (100) and to pass said information on to said internet control message protocol execution means (907) via said inter-protocol communication means (908) to be transmitted in an internet control message protocol message (603).

10. The mobile host (107) according to claim 9, wherein
said inter-protocol communication means (908) is further configured to transfer information from said internet control message protocol execution means (907) to said layer 2 execution means (906); and
said internet control message protocol execution means (907) is further configured to receive a message (608) containing information about completion of a new multi-protocol label switching tunnel (308) or a new branch multi-protocol label switching tunnel (703) and to pass said information to said layer 2 execution means via said inter-protocol communication means (908).

11. A router for a mobile network (100), configured to serve as access router (104) for said mobile network, the router comprising:
internet control message protocol execution means (808) for executing functions according to an internet control message protocol;
multi-protocol label switching execution means (807) for executing functions according to a multi-protocol label switching protocol; and
inter-protocol communication means (809) for transferring information from said internet control message protocol execution means (808) to said multi-protocol label switching execution means (807),
wherein said internet control message protocol execution means (808) is further adapted to receive internet control message protocol messages (603) containing information related to multi-protocol label switching, and to pass said information to said multi-protocol label switching execution means via said inter-protocol communication means (809).

12. The router according to claim 11, wherein said multi-protocol label switching execution means (807) is further configured to receive information about an identifier of an egress node (106, 209) within said mobile network (100) and about an identifier of a mobile host (107) within said mobile network from said inter-protocol communication means (809).

13. The router according to claim 12, wherein said multi-protocol label switching execution means (807) is further configured to initiate a setup of a new multi-protocol label switching tunnel (308) to the egress node (106, 209) identified by said identifier, said new multi-protocol label switching tunnel having parameters essentially identical to the parameters of an existing multi-protocol label switching tunnel (307) associated with the mobile host (107) identified by said identifier of a mobile host.

14. The router according to claim 13, further comprising storage means (810) configured to store a database in which tunnel parameters are stored associated with identifiers of mobile hosts, wherein said multi-protocol label switching execution means (807) is further configured to retrieve said tunnel parameters form said database.

15. The router according to claim 12, wherein said multi-protocol label switching execution means (807) is further configured to determine an intermediate node (108) within an existing multi-protocol label switching tunnel as a branch node and to initiate a setup of a new branch multi-protocol label switching tunnel (703) to the egress node (106, 209) identified by said identifier.

16. The router according to one of the claims 13 to 15, wherein said multi-protocol label switching execution means (807) is further configured to pass information about a completion of said new multi-protocol label switching tunnel (308) or said new branch multi-protocol label switching tunnel (703) to said internet control message protocol execution means (808) via said inter-protocol communication means (809), to be transmitted in a internet control message protocol message (608).

17. A mobile network (100) comprising at least one mobile host (107) according to one of the claims 8 to 10 and at least one router (104) according to one of the claims 11 to 16.

18. A method for re-configuring, in connection with a handover, a data path for delivery of data packets to a mobile host (107) in a mobile network (100) which uses a first protocol for establishing a data tunnel between an access router (104) and an egress node (106, 209) of at least a part of the mobile network (100), and using a second protocol for communicating control messages, associated with addressing of data packets, between nodes of said mobile network, the method comprising the steps of:
receiving (601), by the mobile host (107), information about an identity of an egress node (106) of said at least a part of the network;
sending (603) a message according to said second protocol from said mobile host to said access router (104), said message comprising information about said identity of said egress node and an identity of said mobile host (107); and
establishing (607, 702) a data tunnel from said access router (104) to said egress node (106, 209), wherein said data tunnel carries data packets destined for said mobile host (107).
